# EUROPEAN PATENT SPECIFICATION

(11) **EP 3 726 611 B1**
(45) Date of publication and mention of the grant of the patent: **20.07.2022**
(21) Application number: 19193542.8
(22) Date of filing: 26.08.2019
(51) Int. Cl.: H01M 10/04, H01M 50/20

(54) **BATTERY MODULE AND BATTERY PACK**
BATTERIEMODUL UND BATTERIEPACK
MODULE DE BATTERIE ET BLOC BATTERIE

(30) Priority: 18.04.2019 CN 201920528556 U
(43) Date of publication of application: 21.10.2020
(73) Proprietor: Contemporary Amperex Technology Co., Limited, Ningde, Fujian 352100 (CN)
(72) Inventor: HOU, Yujia, Fujian Province, 352100 (CN); YOU, Shubing, Fujian Province, 352100 (CN); YAO, Jihua, Fujian Province, 352100 (CN)
(74) Representative: DREISS Patentanwälte PartG mbB

(56) References cited:
- CN-A- 106 450 090
- US-A1- 2016 204 400

## Description

### TECHNICAL FIELD

The present disclosure relates to the technical field of energy storage, and in particular, to a battery module and a battery pack.

### BACKGROUND

The power battery of the vehicle includes a case and a plurality of battery modules located in the case. Each battery module includes a plurality of batteries stacked on each other. Two end plates are provided at two ends of the plurality of batteries along the length direction, and two side plates are provided on two sides of the plurality of batteries along the width direction. The end plates are fixedly connected to the side plates to fix the batteries and form a battery module. In the battery module, in addition to the batteries, the end plates and the side plates occupy a relatively large space and have a relatively great weight, thereby resulting in low space utilization and a low energy density of the battery module and the power battery.

CN 106450090A discloses a battery module. The battery module includes at least one battery unit 1, which includes a battery cell 12 and an insulated receiving assembly 11. The receiving assembly 11 includes a plurality of brackets that are sequentially arranged in a front and rear direction of the battery unit 1. A groove 113 is provided on one side of one bracket close to the other bracket. The grooves 113 between the two adjacent brackets form a battery accommodating groove, and a battery cell 12 is arranged in the battery accommodating groove. The receiving assembly 11 also includes a transverse annular groove 117 and a longitudinal annular groove 118. When a plurality of battery units 1 are assembled, binding belts 110 are bound and fixed along the transverse annular groove 117 and the longitudinal annular groove 118, respectively, to obtain the battery module.

US 2016/204400A1 discloses a retention assembly for a traction battery cell array. The retention assembly includes a pair of endplates 200. The endplates 200 are spaced apart from one another to accommodate positioning of the battery cell array 104 therebetween. The end plates 200 define vertical edges 204. One or more retention straps 210 may extend from the vertical edges 204 and be mechanically connected by male connecting portions 214 and female connecting portions 216, thereby assembling a battery module.

### SUMMARY

In view of the above, the present disclosure provides a battery module and a battery pack, aiming to solve the problems in the related art, i.e., the low space utilization and energy density of the battery module and the battery pack, which is caused by the large volume and great weight of the end plates and the side plates of the battery module known in the related art.

The present disclosure provides a battery module. The battery module includes: a battery unit array structure, which includes a plurality of battery units stacked along a length direction and has two opposite end portions along the length direction and two opposite side portions along a width direction; and at least two connecting components spaced apart from each other, each of the at least two connecting components including a first holding portion and a second holding portion. In each of the at least two connecting components , the first holding portion is located at one of the two end portions of the battery unit array structure along the length direction, and connected to a part of the one of the two end portions. In each of the at least two connecting components, the second holding portion is located at one of the two side portions of the battery unit array structure along the width direction, and connected to a part of the one of the two side portions. Each of the at least two connecting components includes a first holding plate and a second holding plate perpendicular to the first holding plate. The first holding plate is the first holding portion, and the second holding plate is the second holding portion. The first holding plate has a smaller area than the end portions, and the second holding plate has a smaller area than the side portions.

In an embodiment, the battery module further includes at least one bundling belt surrounding the battery unit array structure and the at least two connecting components. Each of the at least two connecting components is provided with a groove, and along a height direction, a part of the at least one bundling belt is disposed in the groove.

In an embodiment, the battery module further includes at least two insulating components, wherein each of the at least two insulating components is disposed between one of the least two connecting components and the battery unit array structure.

In an embodiment, each of the at least two insulating components includes a first insulating plate and a second insulating plate. The first insulating plate covers at least the first holding plate, and the second insulating plate covers at least the second holding plate.

In an embodiment, each of the at least two insulating components further includes a third insulating plate and a fourth insulating plate. The third insulating plate is connected to a top of the first insulating plate and a top of the second insulating plate, and the third insulating plate abuts against a top of the battery unit array structure. The fourth insulating plate is connected to a bottom of the first insulating plate and a bottom of the second insulating plate, and the fourth insulating plate abuts against a bottom of the battery unit array structure.

In an embodiment, each of the least two connecting components further includes a first connecting portion, and the first connecting portion is configured to be connected to an adjacent battery module.

The present disclosure further provides a battery pack, including a case having an inner cavity, and a plurality of battery modules disposed in the inner cavity. Each of the plurality of battery modules is the battery module described above.

In an embodiment, each of the least two connecting components includes a first connecting portion, and the first connecting portion includes a first connecting plate and/or a second connecting plate. Along the length direction, two adjacent battery modules of the plurality of battery modules are fixedly connected by the first connecting plate; and/ or along the width direction, two adjacent battery modules of the plurality of battery modules are fixedly connected by the second connecting plate.

Each of the least two connecting components includes a second connecting portion. The second connecting portion is fixed to a bottom of the first holding portion and a bottom of the second holding portion, and/or the second connecting portion is fixed to a top of the first holding portion and a second holding portion.

In the present disclosure, along the length direction, two ends of the battery unit array structure are fixedly connected by at least two first holding portions, and along the width direction, two sides of the battery unit array structure are fixedly connected by at least two second holding portions, such that the battery units are integrally connected in the length direction and the width direction. Therefore, during the assembling of the battery units according to the present disclosure, the conventional end plate and side plate are replaced by the first holding portion and the second holding portion. Compared with the end plate and the side plate, the first holding portion and the second holding portion have the lighter weight and the smaller volume. In this way, the energy density of the battery module and the space utilization both can be improved, while facilitating the assembling of the battery units.

### BRIEF DESCRIPTION OF DRAWINGS

In order to more clearly illustrate the technical solutions of the embodiments of the present disclosure, the drawings used in the embodiments will be briefly described as below. The drawings described below are merely some embodiments of the present disclosure. Based on these drawings, those skilled in the art can obtain other drawings without paying creative efforts.
FIG. 1 is a structural schematic diagram of a battery module according to a first embodiment of the present disclosure;
FIG. 2 is an exploded view of FIG. 1;
FIG. 3 is a structural schematic diagram of a connecting component shown in FIG. 2 according to a specific embodiment;
FIG. 4 is a structural schematic diagram of an insulating component shown in FIG. 2;
FIG. 5 is a top view of a battery module according to a second embodiment of the present disclosure;
FIG. 6 is a partial enlarged view of a portion I shown in FIG. 5;
FIG. 7 is a top view of a battery module according to a third embodiment of the present disclosure;
FIG. 8 is a partial enlarged view of a portion II shown in FIG. 7;
FIG. 9 is a structural schematic diagram of battery modules of FIG. 1 connected along a length direction L;
FIG. 10 is a structural schematic diagram of battery modules of FIG. 5 connected along a width direction W;
FIG. 11 is a partial enlarged view of a portion III of FIG. 10;
FIG. 12 is a structural schematic diagram of battery modules of FIG. 7 connected along a length direction L and a width direction W; and
FIG. 13 is a partial enlarged view of a portion IV shown in FIG. 12.

### Reference number:

1 battery module
11 battery unit array structure
   111 battery unit
   112 first end potion
   113 second end portion
   114 first side portion
   115 second side portion
12 connecting component
   121 first holding portion
   122 second holding portion
   123 first connecting plate
      123a first mounting hole
   124 second connecting plate
   125 second connecting portion
      125a third mounting hole
   126 first groove
   127 second groove
13 insulating component
   131 first insulating plate
   132 second insulating plate
   133 third insulating plate
   134 fourth insulating plate
14 first bundling belt
15 second bundling belt

### DESCRIPTION OF EMBODIMENTS

For better understanding the technical solutions of the present disclosure, the embodiments of the present disclosure will be described in detail below with reference to the accompanying drawings.

It should be understood that, the described embodiments are merely parts of, rather than all of the embodiments of the present disclosure. Based on these embodiments described in the present disclosure, other embodiments obtained by those skilled in the art without paying creative efforts shall fall within the protection scope of the present disclosure.

The terms in the embodiments of the present disclosure are merely used for describing specific embodiments, but not intended to limit the present disclosure. The singular forms such as "a", "an", "the said" and "the" are also intended to include the plural forms, unless the context indicates otherwise.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

It should be understood that terms indicating orientations or positions, such as "upper", "lower", "left", "right", etc., generally are used to describe the orientations or positions with reference to the drawings, and thus should not be construed as a limitation of the present disclosure. It also should be understood that when an element is referred as being "on" or "under" another element, the element can be directly located "on" or "under" another element or connected to another element with an intermediate element.

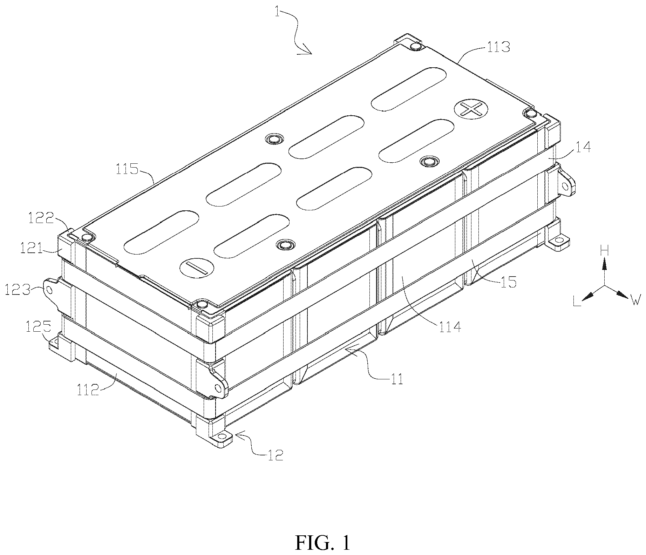

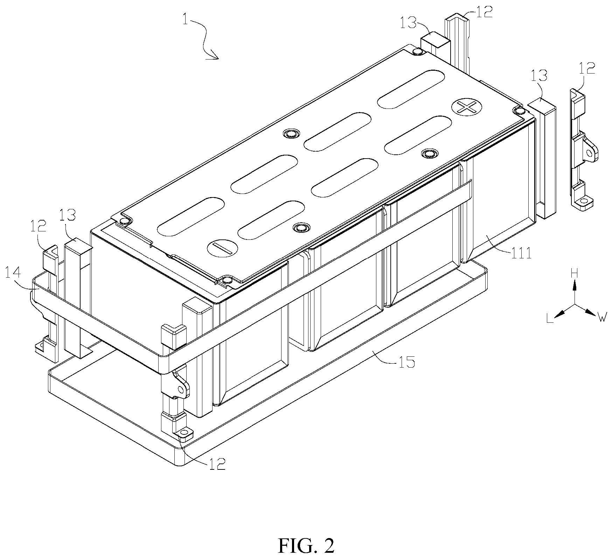

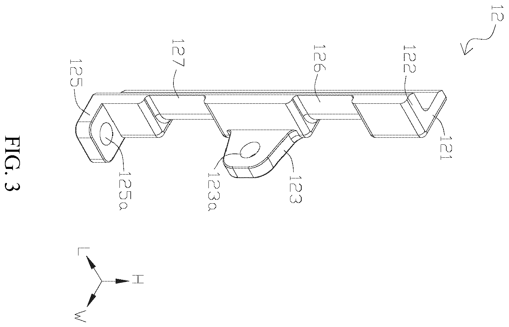

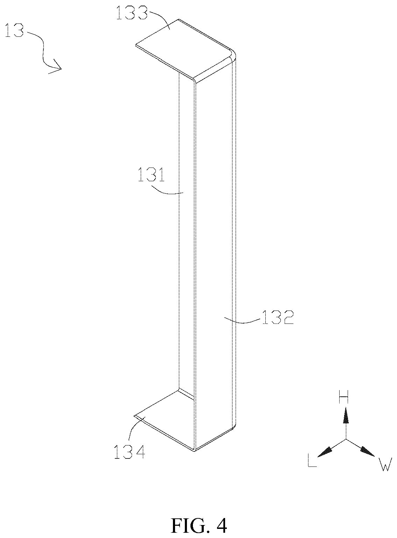

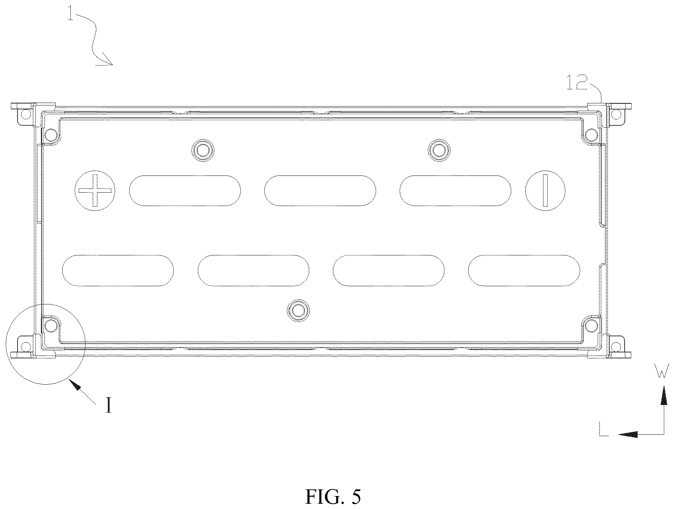

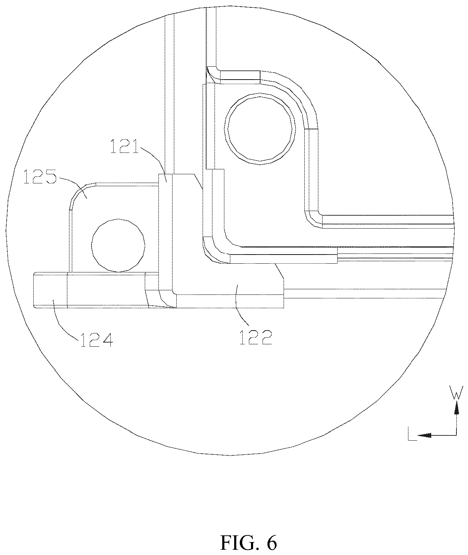

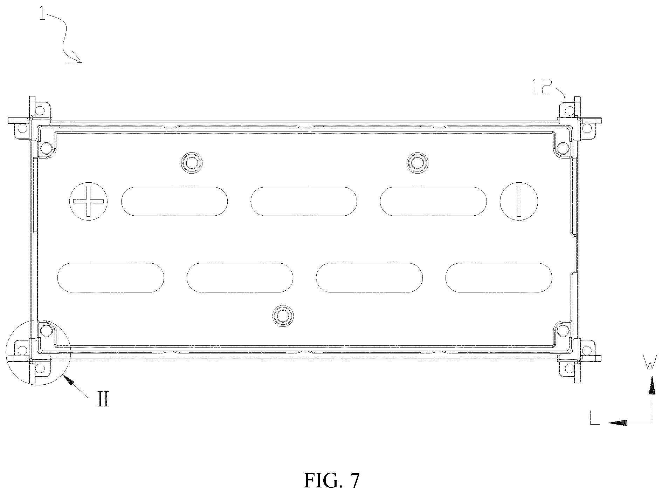

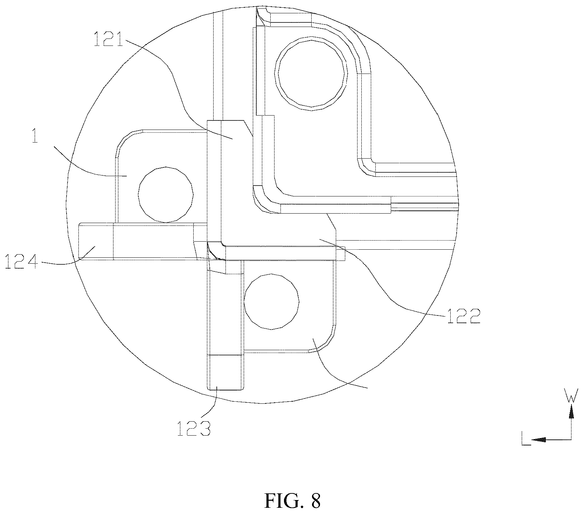

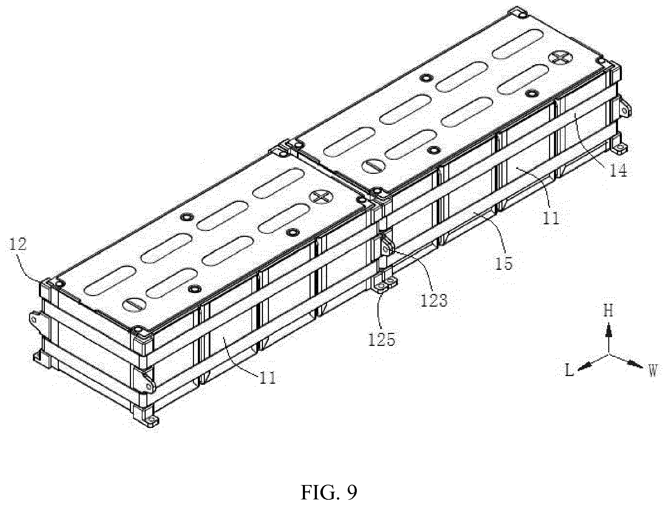

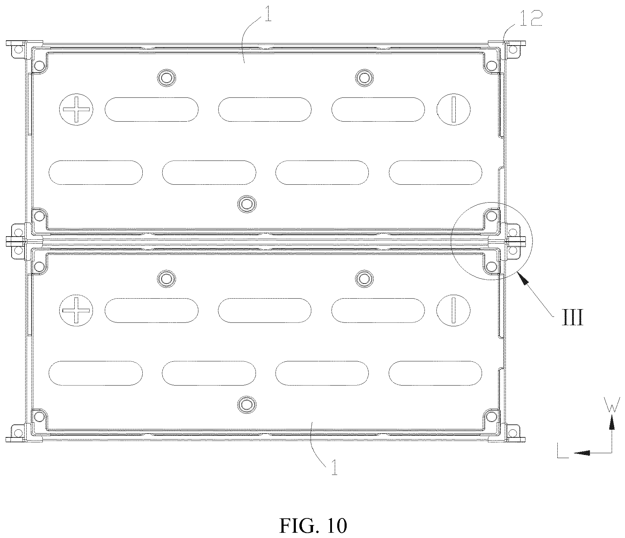

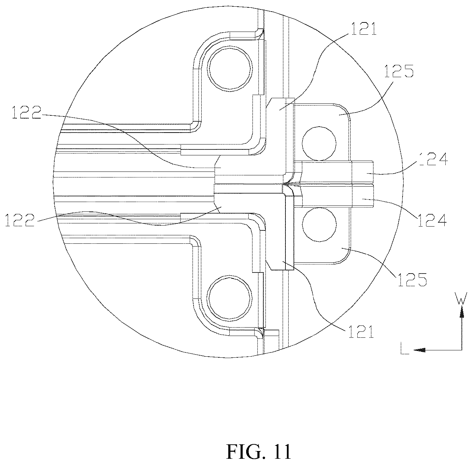

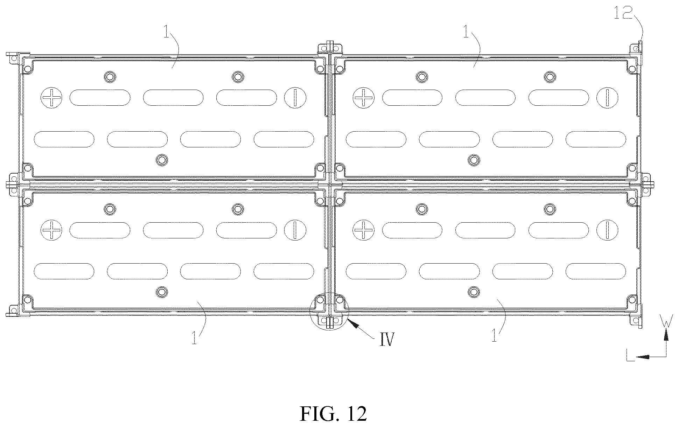

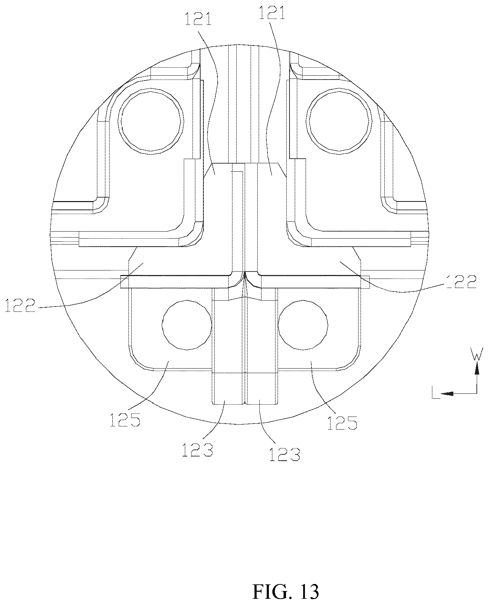

Referring to FIG. 1 to FIG. 13, FIG. 1 is a structural schematic diagram of a battery module according to a first embodiment of the present disclosure; FIG. 2 is an exploded view of FIG. 1; FIG. 3 is a structural schematic diagram of a connecting component shown in FIG. 2 according to a specific embodiment; FIG. 4 is a structural schematic diagram of an insulating component shown in FIG. 2; FIG. 5 is a top view of a battery module according to a second embodiment of the present disclosure; FIG. 6 is a partial enlarged view of a portion I shown in FIG. 5; FIG. 7 is a top view of a battery module according to a third embodiment of the present disclosure; FIG. 8 is a partial enlarged view of a portion II shown in FIG. 7; FIG. 9 is a structural schematic diagram of battery modules of FIG. 1 connected along a length direction L; FIG. 10 is a structural schematic diagram of battery modules of FIG. 5 connected along a width direction W; FIG. 11 is a partial enlarged view of a portion III of FIG. 10; FIG. 12 is a structural schematic diagram of battery modules of FIG. 7 connected along a length direction L and a width direction W; and FIG. 13 is a partial enlarged view of a portion IV shown in FIG. 12.

The present disclosure provides a battery pack, and the battery pack includes a case and a plurality of battery modules 1 disposed in the case. The plurality of battery modules 1 can be stacked along any of three directions, i.e., a length direction L, a width direction W and a height direction H. For example, the battery modules 1 shown in FIG. 9 are stacked along the length direction L, the battery modules 1 shown in FIG. 10 are stacked along the width direction W, and the battery modules 1 shown in FIG. 12 are stacked along both the length direction L and the width direction W. The battery modules 1 are mounted in the case of the battery pack, and the case separates the battery modules 1 from the external environment to exert waterproof and dustproof effects.

As shown in FIG. 1 and FIG. 2, the battery module 1 includes a battery unit array structure 11, and the battery unit array structure 11 includes a plurality of battery units 111 stacked along the length direction L (a direction, in which the battery units 111 are stacked is the length direction L of the battery unit array structure 11). Adjacent battery units 111 can be connected by an adhesive. Along the length direction L, the battery unit array structure 11 has two opposite end portions, which are a first end portion 112 and a second end portion 113, respectively. Each of the first end portion 114 and the second end portion 115 is formed by an end surface of one battery unit 111. Along the width direction W, the battery unit array structure 11 has two opposite side portions, which are a first side portion 114 and a second side portion 115, respectively. Each of the first side portion 114 and the second side portion 115 is formed by a side surface of one battery unit 111.

The battery module 1 further includes at least two connecting components 12 that are spaced apart from each other. Each connecting component 12 includes a first holding portion 121 and a second holding portion 122. In each connecting component 12, at least two first holding portions 121 are located at two end portions of the battery unit array structure 11 along the length direction L, and are connected to a part of the two end portions. That is, at least one first holding portion 121 corresponds to the first end portion 112, and is fixedly connected to a part of the first end portion 112; and at least one first holding portion 121 corresponds to the second end portion 113 and is fixedly connected to a part of the second end portion 113.

Meanwhile, in each connecting component 12, at least two second holding portions 122 are located on both sides of the battery unit array structure 11 along the width direction W, and are fixedly connected with a part of the two side portions. That is, at least one second holding portion 122 corresponds to the first side portion 114 and is fixedly connected to a part of the first side portion 114, and at least one second holding portion 122 corresponds to the second side portion 115 and is fixedly connected to a part of the second side portion 115.

In the present disclosure, along the length direction L, one end of the battery unit array structure 11 is fixedly connected with at least one first holding portion 121, and the other end of the battery unit array structure 11 is fixedly connected with at least one first holding portion 121; and along the width direction W, one side of the battery unit array structure 11 is fixedly connected with at least one second holding portion 122 and the other side of the battery unit array structure 11 is fixedly connected with at least one second holding portion 122, such that the battery units 111 are integrally connected in the length direction L and the width direction W. Therefore, during the assembling of the battery units 111 according to the present disclosure, the conventional end plate and side plate are replaced by the first holding portion 121 and the second holding portion 122. Compared with the end plate and the side plate, the first holding portion 121 and the second holding portion 122 have the lighter weight and the smaller volume. In this way, the energy density of the battery module 1 and the space utilization both can be improved, while facilitating the assembling of the battery units 111.

It should be understood that, in the present disclosure, "the first holding portions 121 being respectively connected to a part of the two end portions" includes that they are directly connected to each other, or they are indirectly connected via other component such as a first insulating plate 131 as described below. Similarly, in the present disclosure, "the second holding portions 122 being respectively connected to a part of the two side portions" includes that they are directly connected to each other, or they are indirectly connected to each other via other component such as a second insulating plate 132 as described below.

In the battery module 1 of the present disclosure, when the battery unit 111 thermally expands, the expansion force acts on the first holding portion 121 of the connecting component 12. Therefore, the connecting component 12 is required to have a relatively high strength and rigidity. The connecting component 12 can be generally made of metal or other material having high strength, for example, the connecting component 12 can be made of cast aluminum. Since the conventional end plate and the side plate are omitted in the battery module according to the present disclosure, the space between adjacent connecting components 12 can be used as an expansion space for the thermal expansion of the battery units 111, thereby preventing the battery module 1 from being damaged by the accumulating expansion force of the battery units 11.

As shown in FIG. 3, in the connecting component 12, the first holding portion 121 is a first holding plate having a plate-like structure, and the second holding portion 122 is a second holding plate having a plate-like structure, and the first holding plate and the second holding plate are perpendicular to each other. The two holding plates are not strictly perpendicular to each other in the mathematical meaning, as long as they can be respectively connected to the end portion and side portion of the battery unit array structure 11. When the connecting component 12 is fixedly connected to the battery unit array structure 11, a plate surface of the first holding plate is perpendicular to the length direction L, i.e., the first holding plate is parallel with the first end portion 112 and the second end portion 113 of the battery unit array structure 11, such that the battery unit array structure 11 can be fixedly held in the length direction L by the at least two first holding plates; and the second holding plate is parallel with the first side portion 114 and the second side portion 115 of the battery unit array structure 11, such that the battery unit array structure 11 can be fixedly held in the width direction W by the at least two second holding plates.

The first holding plate has a smaller area than the first end portion 112 and the second end portion 113 of the battery unit array structure 11, i.e., the area of the first holding plate is smaller than the area of the conventional end plate. The second holding plate has a smaller area than the first side portion 114 and the second side portion 115 of the battery unit array structure 11, i.e., the area of the second holding plate is smaller than the area of the conventional side plate.

In the present embodiment, when the first holding portion 121 and the second holding portion 122 both have plate-like structures, there are several advantages such as simple structure, easier molding, as well as smaller thickness and weight, thereby further improving the energy density of the battery module 1. At the same time, under the same volume, the holding portions having the plate-like structure has a larger area for contacting the battery unit array structure 11, thereby improving the connection reliability.

In the embodiment shown in FIG. 1 and FIG. 2, the battery module 1 includes four connecting components 12. Each two of the four connecting components 12, as a group, are located at one end of the battery unit array structure 11 in the length direction L (or the width direction W). Each connecting component 12 is located at one of four corners of the battery unit array structure 11, and the four connecting components 12 include four first holding portions 121 and four second holding portions 122. Thus, in the battery unit array structure 11, along the length direction L, the first end portion 112 are fixedly connected with two first holding portions 121 and the second end portion 113 are fixedly connected by two first holding portions 121; and along the width direction W, the first side portion 114 are fixedly connected with two second holding portions 122 and the second side portion 115 are fixedly connected with two second holding portions 122.

In the present embodiment, the battery units 11 are grouped in such manner that a high connection reliability can be achieved by using the fewest connecting components 12. It is also possible that the battery module 1 includes other numbers of the connecting components 12. The number of the connecting components 12 is not specifically limited in the present disclosure, as long as the battery units 111 can be connected.

Further, as shown in FIG. 1 and FIG. 2, the battery module 1 further includes one or more bundling belts surrounding the battery unit array structure 11 and the connecting components 12, such that the battery units 11 are also fixed by the bundling belt in addition to the connecting components 12, thereby improving the connection reliability of each battery unit 111.

When the battery module 1 includes a plurality of bundling belts, the plurality of bundling belts is distributed along the height direction H. In the embodiment shown in FIG. 1 and FIG. 2, the battery module 1 includes two bundling belts, i.e., a first bundling belt 14 and a second bundling belt 15. Both bundling belts surround the battery unit array structure 11 and the connecting components 12, and are distributed along the height direction H. As shown in FIG. 3, a first groove 126 and a second groove 127 are provided on an external side of the connecting component 12, and the first groove 126 and the second groove 127 are distributed along the height direction H. Along the height direction H, a part of the first bundling belt 14 is disposed in the first groove 126 and matches the first groove 126. Along the height direction H, a part of the second bundling belt 15 is disposed in the second groove 127 and matches the second groove 127. The first groove 126 and the second groove 127 both are provided on the first holding portion 121 and the second holding portion 122 of the connecting component 12.

In the present embodiment, the first bundling belt 14 and the second bundling belt 15 can improve the connection reliability of the battery units 11, and in the meantime, the matching between the bundling belt and groove can prevent the bundled belt from detaching. The first bundling belt 14 and/or the second bundling belt 15 are made of a material having high rigidity such as spring steel or the like.

In the above embodiments, the connecting components 12 are generally made of a metal material to improve the rigidity thereof. As shown in FIG. 1 and FIG. 2, the battery module 1 further includes at least two insulating components 13, and each insulating component 13 is located between the connecting component 12 and the battery unit array structure 11 to insulate the connecting component 12 from the battery unit array structure 11. Therefore, in the battery module 1, a number of the insulating components 13 is not smaller than the number of the connecting components 12.

As shown in FIG. 4, the insulating component 13 includes a first insulating plate 131 and a second insulating plate 132. The first insulating plate 131 has a plate surface perpendicular to the length direction L, i.e., the first insulating plate 131 is parallel with the first holding portion 121, the first end portion 112 and the second end portion 113. The first insulating plate 131 covers at least the first holding plate (the first holding portion 121). Similarly, the second insulating plate 132 has a plate surface perpendicular to the width direction W, i.e., the second insulating plate 132 is parallel with the second holding portion 122, the first side portion 114 and the second side portion 115. The second insulating plate 132 covers at least the second holding plate (the second holding portion 122).

In this embodiment, the first holding portion 121 of the connecting component 12 and the battery unit array structure 11 are insulated by the first insulating plate 131, and the second holding portion 122 of the connecting component 12 and the battery unit array structure 11 are insulated by the second insulating plate 132.

Further, as shown in FIG. 4, the insulating component 13 includes a third insulating plate 133 and a fourth insulating plate 134. Each of the third insulating plate 133 and the fourth insulating plate 134 has a plate surface perpendicular to the height direction H. The third insulating plate 133 is connected to the top of the first insulating plate 131 and the top of the second insulating plate 132, and the fourth insulating plate 134 is connected to the bottom of the first insulating plate 131 and the bottom of the second insulating plate 132. The third insulating plate 133 abuts against the top of the battery unit array structure 11, and the fourth insulating plate 134 abuts against the bottom of the battery unit array structure 11.

Therefore, the insulating component 13 can achieve a complete insulation between the battery unit array structure 11 and the connecting component 12 along the length direction L, the width direction W, and the height direction H. The four insulating plates of the insulating component 13 are in contact with the surfaces of the battery unit array structure 11, such that the insulating component 13 can be mounted on the battery unit array structure 11. The first holding portion 121 and the second holding portion 122 of the connecting component 12 respectively abut against the first insulating plate 131 and the second insulating plate 132 of the insulating component 13, so as to form the connection between the insulating component 13 and the connecting component 12.

It is also possible that other connecting structures can be provided between the insulating component 13 and the battery unit array structure 11, between the insulating component 13 and the connecting component 12, so as to achieve connections therebetween. The connecting structures therebetween also can be omitted, which has advantages of simple structure, easier manufacturing, and increased energy density of the battery module 1.

Further, in the above embodiments, the connecting component 12 further includes a first connecting portion, and the first connecting portion is configured to be connected to an adjacent battery module 1. For example, two adjacent battery modules 1 both have a connecting component 12 provided with a first connecting portion, so that the two battery modules 1 can be fixedly connected through respective first connecting portions.

In this embodiment, the battery modules 1 of the battery pack are connected by respective connecting components 12. That is, the connecting components 12 can not only connect the plurality of battery units 111 to form the battery module 1, but also can connect adjacent battery modules 1. Therefore, compared with the battery pack known in the related art, the grouping manner according to the present disclosure has an advantage of simple structure and the connecting component 12 occupies a smaller space and has a lighter weight, thereby enhancing the space utilization of the battery case and improving the energy density and grouping efficiency of the battery pack.

For example, the first connecting portion of the connecting component 12 includes a first connecting plate 123 and/or a second connecting plate 124. The first connecting plate 123 has a plate surface perpendicular to the length direction L. Along the length direction L, the first connecting plates 123 of two adjacent battery modules 1 are fixedly connected, so that the two battery modules 1 are connected along the length direction L, as shown in FIG. 9. The second connecting plate 124 has a plate surface perpendicular to the width direction W. Along the width direction W, the second connecting plates 124 of two adjacent battery modules 1 are fixedly connected, so that the two battery modules 1 are connected along the width direction W, as shown in FIG. 10 and FIG. 11. As shown in FIG .12 and FIG. 13, the connecting component 12 includes the above first connecting plate 123 and second connecting plate 124, the first connecting plates 123 of two adjacent battery modules 1 are fixedly connected along the length direction L, and the second connecting plates 124 of two adjacent battery modules 1 are fixedly connected along the width direction W, so as to achieve the connections of the battery modules 1 along the length direction L and along the width direction W.

In this embodiment, the first connecting plate 123 is provided with a first mounting hole 123a, and the second connecting plate 124 is provided with a second mounting hole (not shown). The first mounting holes 123a of two adjacent battery modules 1 are communicated with one another, and the two adjacent battery modules 1 are fixedly connected via the two first mounting holes 123a. Additionally or alternatively, the second mounting holes of the two adjacent battery modules 1 are communicated with one another, and the two adjacent battery modules 1 are fixedly connected via the two second mounting holes.

In this embodiment, the first connecting plate 123 and/or the second connecting plate 124 have a flat plate structure, and thus have a smaller size in the height direction H, thereby reducing the weight and volume of the connecting component 12, and improving the energy density and space utilization of the battery pack.

Further, as shown in FIG. 3, the connecting component 12 further includes a second connecting portion 125. The second connecting portion 125 is fixed to the bottom of the first holding portion 121 and the bottom of the second holding portion 122, and/or the second connecting portion 125 is fixed to the top of the first holding portion 121 and the top of the second holding portion 122.

The second connecting portion 125 disposed at the bottom of the first holding portion 121 and the bottom of the second holding portion 122 is configured to be fixedly connected to the case of the battery pack. The second connecting portion 125 disposed at the top of the first holding portion 121 and the top of the second holding portion 122 is configured to be fixedly connected to the upper cover of the battery pack and is also configured to be connected to a beam of the case of the battery pack. In addition, when a plurality of battery modules 12 are stacked along the height direction H in the battery pack, the second connecting portion 125 located at the top of the first holding portion 121 and the top of the second holding portion 122 can also be used to be connected to an upper battery module 12, and specifically, connected to the second connecting portion 125 of the upper battery module 12 located at the bottom of the first holding portion 121 and the second holding portion 122.

In an embodiment, the second connecting portion 125 is provided with a third mounting hole 125a, and is fixedly connected to the above components via the third mounting hole 125a.

Therefore, in the present disclosure, the connecting component 12 has the following three functions of: connecting the battery unit array structures 11, connecting the adjacent battery modules 12, connecting the battery modules 12 with the case of the battery pack; and it also has the advantages of simple structure, small volume and small weight, thereby improving the energy density and the grouping efficiency of the battery pack.

The above embodiments of the present disclosure are merely preferable embodiments, but not intended to limit the scope of the present disclosure. Any changes, equivalent substitutions or improvements made upon the concept of the present disclosure should fall into the protection scope of the present disclosure.

## Claims

1. A battery module (1), comprising:
a battery unit array structure (11) comprising a plurality of battery units (111) stacked along a length direction L, wherein the battery unit array structure (11) comprises two opposite end portions (112, 113) along the length direction L and two opposite side portions (114, 115) along a width direction W; and
at least two connecting components (12) spaced apart from each other, each of the at least two connecting components (12) comprising a first holding portion (121) and a second holding portion (122),
**characterized in that** in each of the at least two connecting components (12), the first holding portion (121) is located at one of the two end portions (112, 113) of the battery unit array structure (11) along the length direction L, and connected to a part of the one of the two end portions (112, 113),
in each of the at least two connecting components (12), the second holding portion (122) is located at one of the two side portions (114, 115) of the battery unit array structure along the width direction W, and connected to a part of the one of the two side portions (114, 115);
each of the at least two connecting components (12) comprises a first holding plate and a second holding plate perpendicular to the first holding plate;
the first holding plate is the first holding portion (121), and the second holding plate is the second holding portion (122), and
the first holding plate comprises a smaller area than the end portions (112, 113), and the second holding plate comprises a smaller area than the side portions (114, 115).

2. The battery module (1) according to claim 1, **characterized in** further comprising at least one bundling belt surrounding the battery unit array structure (11) and the at least two connecting components (12),
wherein each of the at least two connecting components (12) is provided with a groove, and along a height direction H, a part of the at least one bundling belt is disposed in the groove.

3. The battery module (1) according to claim 1 or 2, **characterized in** further comprising at least two insulating components (13), wherein each of the at least two insulating components (13) is disposed between one of the at least two connecting components (12) and the battery unit array structure (11).

4. The battery module (1) according to claim 3, **characterized in that** each of the at least two insulating components (13) comprises a first insulating plate (131) and a second insulating plate (132),
the first insulating plate (131) covers at least the first holding plate, and the second insulating plate (132) covers at least the second holding plate.

5. The battery module (1) according to claim 4, **characterized in that** each of the at least two insulating components (13) further comprises a third insulating plate (133) and a fourth insulating plate (134),
the third insulating plate (133) is connected to a top of the first insulating plate (131) and a top of the second insulating plate (132), and the third insulating plate (133) abuts against a top of the battery unit array structure (11), and
the fourth insulating plate (134) is connected to a bottom of the first insulating plate (131) and a bottom of the second insulating plate (132), and the fourth insulating plate (134) abuts against a bottom of the battery unit array structure (11).

6. The battery module (1) according to any one of claims 1 to 5, **characterized in that** each of the least two connecting components (12) further comprises a first connecting portion, and the first connecting portion is configured to be connected to an adjacent battery module (1).

7. A battery pack, comprising:
a case having an inner cavity; and
a plurality of battery modules disposed in the inner cavity,
**characterized in that** each of the plurality of battery modules is the battery module (1) according to any one of claims 1 to 7.

8. The battery pack according to claim 7, **characterized in that** each of the least two connecting components (12) comprises a first connecting portion, and the first connecting portion comprises a first connecting plate (123) and/or a second connecting plate (124),
along the length direction L, two adjacent battery modules of the plurality of battery modules (1) are fixedly connected by the first connecting plate (123), and/ or
along the width direction W, two adjacent battery modules of the plurality of battery modules (1) are fixedly connected by the second connecting plate (124).

9. The battery pack according to claim 7 or 8, **characterized in that** each of the least two connecting components (12) comprises a second connecting portion (125),
wherein the second connecting portion (125) is fixed to a bottom of the first holding portion (121) and a bottom of the second holding portion (122), and/or
the second connecting portion (125) is fixed to a top of the first holding portion (121) and a top of the second holding portion (122).

## Patentansprüche

1. Batteriemodul (1), umfassend:
eine Batterieeinheitsanordnungsstruktur (11), die mehrere Batterieeinheiten (111) umfasst, die entlang einer Längsrichtung L gestapelt sind, wobei die Batterieeinheitsanordnungsstruktur (11) zwei gegenüberliegende Endabschnitte (112, 113) entlang der Längsrichtung L und zwei gegenüberliegende Seitenabschnitte (114, 115) entlang einer Breitenrichtung W umfasst; und
mindestens zwei voneinander beabstandete Verbindungskomponenten (12), wobei jede der mindestens zwei Verbindungskomponenten (12) einen ersten Halteabschnitt (121) und einen zweiten Halteabschnitt (122) umfasst,
**dadurch gekennzeichnet, dass** sich in jeder der mindestens zwei Verbindungskomponenten (12) der erste Halteabschnitt (121) an einem der zwei Endabschnitte (112, 113) der Batterieeinheitsanordnungsstruktur (11) entlang der Längsrichtung L befindet und mit einem Teil des einen der zwei Endabschnitte (112, 113) verbunden ist,
sich in jeder der mindestens zwei Verbindungskomponenten (12) der zweite Halteabschnitt (122) an einem der zwei Seitenabschnitte (114, 115) der Batterieeinheitsanordnungsstruktur entlang der Breitenrichtung W befindet und mit einem Teil des einen der zwei Seitenabschnitte (114, 115) verbunden ist;
jede der mindestens zwei Verbindungskomponenten (12) eine erste Halteplatte und eine zweite Halteplatte senkrecht zu der ersten Halteplatte umfasst;
wobei die erste Halteplatte der erste Halteabschnitt (121) ist und die zweite Halteplatte der zweite Halteabschnitt (122) ist und
die erste Halteplatte eine kleinere Fläche als die Endabschnitte (112, 113) umfasst und die zweite Halteplatte eine kleinere Fläche als die Seitenabschnitte (114, 115) umfasst.

2. Batteriemodul (1) nach Anspruch 1, **dadurch gekennzeichnet, dass** es ferner mindestens einen Bündelungsgurt, der die Batterieeinheitsanordnungsstruktur (11) und die mindestens zwei Verbindungskomponenten (12) umgibt, umfasst,
wobei jede der mindestens zwei Verbindungskomponenten (12) mit einer Nut versehen ist und entlang einer Höhenrichtung H ein Teil des mindestens einen Bündelungsgurts in der Nut eingerichtet ist.

3. Batteriemodul (1) nach Anspruch 1 oder 2, **dadurch gekennzeichnet, dass** es ferner mindestens zwei Isolierkomponenten (13) umfasst, wobei jede der mindestens zwei Isolierkomponenten (13) zwischen einer der mindestens zwei Verbindungskomponenten (12) und der Batterieeinheitsanordnungsstruktur (11) eingerichtet ist.

4. Batteriemodul (1) nach Anspruch 3, **dadurch gekennzeichnet, dass** jede der mindestens zwei Isolierkomponenten (13) eine erste Isolierplatte (131) und eine zweite Isolierplatte (132) umfasst,
wobei die erste Isolierplatte (131) mindestens die erste Halteplatte bedeckt und die zweite Isolierplatte (132) mindestens die zweite Halteplatte bedeckt.

5. Batteriemodul (1) nach Anspruch 4, **dadurch gekennzeichnet, dass** jede der mindestens zwei Isolierkomponenten (13) ferner eine dritte Isolierplatte (133) und eine vierte Isolierplatte (134) umfasst,
wobei die dritte Isolierplatte (133) mit einer Oberseite der ersten Isolierplatte (131) und einer Oberseite der zweiten Isolierplatte (132) verbunden ist und die dritte Isolierplatte (133) an einer Oberseite der Batterieeinheitsanordnungsstruktur (11) anstößt und
die vierte Isolierplatte (134) mit einer Unterseite der ersten Isolierplatte (131) und einer Unterseite der zweiten Isolierplatte (132) verbunden ist, und die vierte Isolierplatte (134) an eine Unterseite der Batterieeinheitsanordnungsstruktur (11) anstößt.

6. Batteriemodul (1) nach einem der Ansprüche 1 bis 5, **dadurch gekennzeichnet, dass** jede der mindestens zwei Verbindungskomponenten (12) ferner einen ersten Verbindungsabschnitt umfasst, und der erste Verbindungsabschnitt konfiguriert ist, um mit einem angrenzenden Batteriemodul (1) verbunden zu werden.

7. Batteriesatz, umfassend:
ein Gehäuse, das einen inneren Hohlraum aufweist; und
mehrere Batteriemodule, die in dem inneren Hohlraum eingerichtet sind,
**dadurch gekennzeichnet, dass** jedes der mehreren Batteriemodule das Batteriemodul (1) nach einem der Ansprüche 1 bis 7 ist.

8. Batteriesatz nach Anspruch 7, **dadurch gekennzeichnet, dass** jede der mindestens zwei Verbindungskomponenten (12) einen ersten Verbindungsabschnitt umfasst und der erste Verbindungsabschnitt eine erste Verbindungsplatte (123) und/oder eine zweite Verbindungsplatte (124),
entlang der Längsrichtung L umfasst, wobei zwei angrenzende Batteriemodule der mehreren Batteriemodule (1) durch die erste Verbindungsplatte (123) fest verbunden sind, und/oder
entlang der Breitenrichtung W zwei angrenzende Batteriemodule der mehreren Batteriemodule (1) durch die zweite Verbindungsplatte (124) fest verbunden sind.

9. Batteriesatz nach Anspruch 7 oder 8, **dadurch gekennzeichnet, dass** jede der mindestens zwei Verbindungskomponenten (12) einen zweiten Verbindungsabschnitt (125) umfasst,
wobei der zweite Verbindungsabschnitt (125) an einer Unterseite des ersten Halteabschnitts (121) und einer Unterseite des zweiten Halteabschnitts (122) befestigt ist, und/oder
der zweite Verbindungsabschnitt (125) an einer Oberseite des ersten Halteabschnitts (121) und einer Oberseite des zweiten Halteabschnitts (122) befestigt ist.

## Revendications

1. Module de batterie (1), comprenant :
une structure de réseau d'unités de batterie (11) comprenant une pluralité d'unités de batterie (111) empilées dans une direction de longueur L, dans laquelle la structure de réseau d'unités de batterie (11) comprend deux parties d'extrémité opposées (112, 113) dans la direction de longueur L et deux parties latérales opposées (114, 115) dans une direction de largeur W ; et
au moins deux composants de connexion (12) espacés l'un de l'autre, chacun des au moins deux composants de connexion (12) comprenant une première partie de maintien (121) et une seconde partie de maintien (122),
**caractérisé en ce que** dans chacun des au moins deux composants de connexion (12), la première partie de maintien (121) est située au niveau de l'une des deux parties d'extrémité (112, 113) de la structure de réseau d'unités de batterie (11) le long de la direction de longueur L, et connectée à une partie de l'une des deux parties d'extrémité (112, 113),
dans chacun des au moins deux composants de connexion (12), la seconde partie de maintien (122) est située au niveau de l'une des deux parties latérales (114, 115) de la structure de réseau d'unités de batterie le long de la direction de largeur W, et connectée à une partie de l'une des deux parties latérales (114, 115) ;
chacun des au moins deux composants de connexion (12) comprend une première plaque de maintien et une seconde plaque de maintien perpendiculaire à la première plaque de maintien ;
la première plaque de maintien est la première partie de maintien (121), et la seconde plaque de maintien est la seconde partie de maintien (122), et
la première plaque de maintien comprend une surface plus petite que les parties d'extrémité (112, 113), et la seconde plaque de maintien comprend une surface plus petite que les parties latérales (114, 115).

2. Module de batterie (1) selon la revendication 1, **caractérisé en ce qu'**il comprend en outre au moins une courroie de mise en faisceau entourant la structure de réseau d'unités de batterie (11) et les au moins deux composants de connexion (12),
dans lequel chacun des au moins deux composants de connexion (12) est pourvu d'une rainure, et le long d'une direction de hauteur H, une partie de la au moins une courroie de mise en faisceau est disposée dans la rainure.

3. Module de batterie (1) selon la revendication 1 ou 2, **caractérisé en ce qu'**il comprend en outre au moins deux composants isolants (13), dans lequel chacun des au moins deux composants isolants (13) est disposé entre l'un des au moins deux composants de connexion (12) et la structure de réseau d'unités de batterie (11).

4. Module de batterie (1) selon la revendication 3, **caractérisé en ce que** chacun des au moins deux composants isolants (13) comprend une première plaque isolante (131) et une deuxième plaque isolante (132),
la première plaque isolante (131) couvre au moins la première plaque de maintien, et la seconde plaque isolante (132) couvre au moins la seconde plaque de maintien.

5. Module de batterie (1) selon la revendication 4, **caractérisé en ce que** chacun des au moins deux composants isolants (13) comprend en outre une troisième plaque isolante (133) et une quatrième plaque isolante (134),
la troisième plaque isolante (133) est connectée à une partie supérieure de la première plaque isolante (131) et à une partie supérieure de la deuxième plaque isolante (132), et la troisième plaque isolante (133) vient en butée contre une partie supérieure de la structure de réseau d'unités de batterie (11), et
la quatrième plaque isolante (134) est connectée à une partie inférieure de la première plaque isolante (131) et à une partie inférieure de la deuxième plaque isolante (132), et la quatrième plaque isolante (134) vient en butée contre une partie inférieure de la structure de réseau d'unités de batterie (11).

6. Module de batterie (1) selon l'une quelconque des revendications 1 à 5, **caractérisé en ce que** chacun des au moins deux composants de connexion (12) comprend en outre une première partie de connexion, et la première partie de connexion est configurée pour être connectée à un module de batterie (1) adjacent.

7. Bloc-batterie comprenant :
un boîtier comportant une cavité intérieure ; et
une pluralité de modules de batterie disposés dans la cavité interne,
**caractérisé en ce que** chacun de la pluralité de modules de batterie est le module de batterie (1)
selon l'une quelconque des revendications 1 à 7.

8. Bloc-batterie selon la revendication 7, **caractérisée en ce que** chacun des au moins deux composants de connexion (12) comprend une première partie de connexion, et la première partie de connexion comprend une première plaque de connexion (123) et / ou une seconde plaque de connexion (124),
dans la direction de longueur L, deux modules de batterie adjacents de la pluralité de modules de batterie (1) sont reliés de manière fixe par la première plaque de connexion (123), et / ou
le long de la direction de largeur W, deux modules de batterie adjacents de la pluralité de modules de batterie (1) sont reliés de manière fixe par la seconde plaque de connexion (124) .

9. Bloc-batterie selon la revendication 7 ou 8, **caractérisé en ce que** chacun des au moins deux composants de connexion (12) comprend une seconde partie de connexion (125),
dans lequel la seconde partie de connexion (125) est fixée à une partie inférieure de la première partie de maintien (121) et à une partie inférieure de la seconde partie de maintien (122), et / ou
la seconde partie de connexion (125) est fixée à une partie supérieure de la première partie de maintien (121) et à une partie supérieure de la seconde partie de maintien (122).
